# EUROPEAN PATENT APPLICATION

(11) **EP 1 136 332 A2**
(43) Date of publication of application: **26.09.2001**
(21) Application number: 01105677.7
(22) Date of filing: 07.03.2001
(51) Int. Cl.: B60R 25/02

(54) **Steering wheel mounted anti-theft device**

(30) Priority: 20.03.2000 IT TO200262; 15.12.2000 IT TO201167
(62) Divisional of application: 01117192.3
(71) Applicant: GROPPO, LAZZARO, 12040 RACCONIGI (CN) (IT); GROPPO, ANDREA, 12040 CERESOLE D'ALBA (CN) (IT)
(72) Inventor: GROPPO, LAZZARO, 12040 RACCONIGI (CN) (IT); GROPPO, ANDREA, 12040 CERESOLE D'ALBA (CN) (IT)
(74) Representative: Robba, Pierpaolo

(57) **Abstract**

Anti-theft device (2) for vehicles that can be coupled to a steering wheel, comprising an elongated body provided with means for being secured to the rim (10) of the steering wheel, constituted by a primary part (4) with first (12) and second (14) means able to engage with respective diametrically opposite portions of the rim (10) of the steering wheel, and a secondary part (6) able to make the primary part (4) longer for preventing the rotation of said steering wheel; the primary part (4) and the secondary part (6) are hinged between them so that the secondary part (6) can rotate with respect to the primary part (4) on a plane substantially parallel to the plane of the rim (10) of the steering wheel, for assuming a working position wherein the two parts (4, 6) are substantially aligned.

## Description

The present invention relates to an anti-theft device for vehicles; in particular, it refers to an anti-theft device of the type that is secured to the steering wheel of a vehicle and that prevents the rotation of the steering wheel.

Devices of this type are known: for instance, the patent US 5,138,853 describes an anti-theft device comprising a rod member that is secured to the steering wheel by means of two locks closing ring-like on the rim of the steering wheel. The length of the rod member is such to prevent the rotation of the steering wheel, prevented by the obstacles present inside the vehicle, windscreen, uprights and so on.

However, the devices available on sale, which are generally realised according to the above mentioned working principle, present some disadvantages. For instance, the length of the rod member makes the device bulky, especially when unused; besides, although said devices are realised in cut-resistant steel, it is possible to remove the device from the steering wheel by cutting the rim of the steering wheel in one or more points.

Therefore it is a first object of the present invention to realise an anti-theft device easily applicable to the steering wheel of a vehicle, able to prevent the rotation of the steering wheel and assuring high security and use convenience.

This and other objects are obtained by the anti-theft device realised according to the invention, as claimed in the hereby attached claims.

It is to be noted that the securing system realised according to the invention can be advantageously used on any type of steering wheel having one or more spokes.

The invention will be now described in detail with particular reference to the attached drawings showing a preferred embodiment of the invention, wherein:
- figure 1 is a side sectional view of a first embodiment of an anti-theft device realised according to the present invention, in closed position;

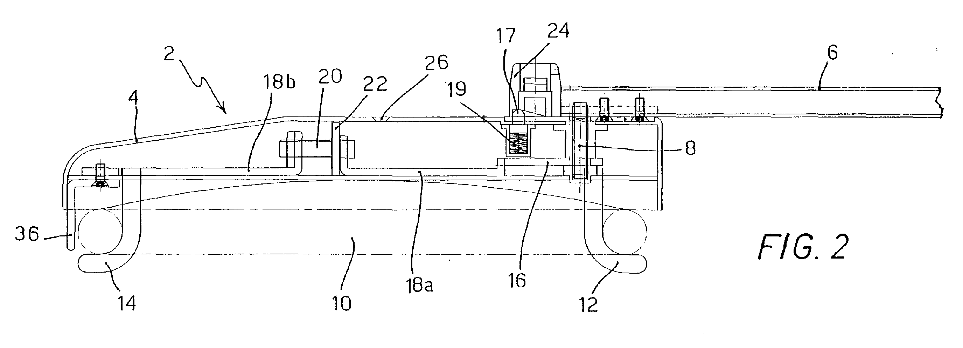

- figure 2 is a side sectional view of the anti-theft device of figure 1, in open position;

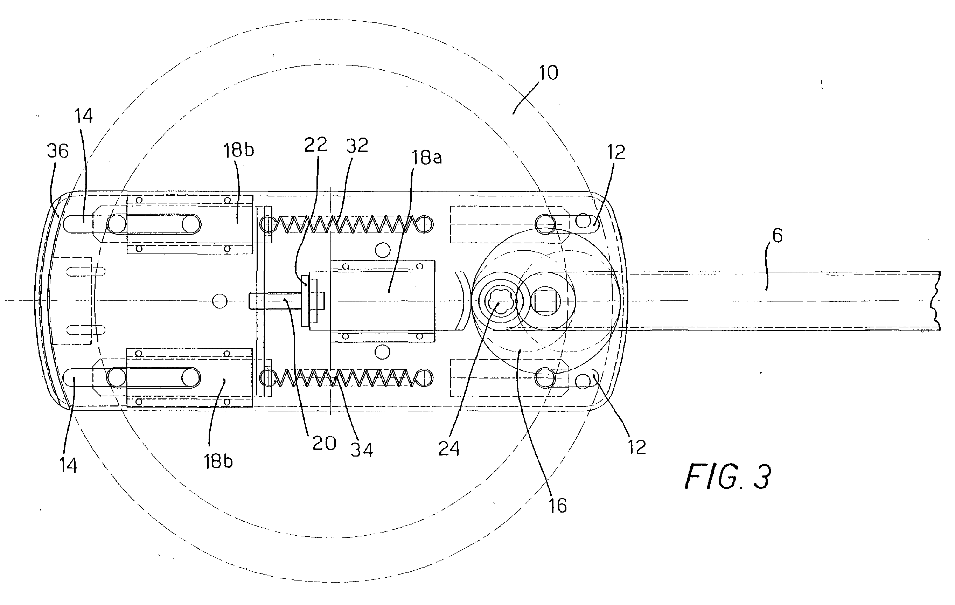

- figure 3 is a top internal view of the anti-theft device of figure 1, in open position;

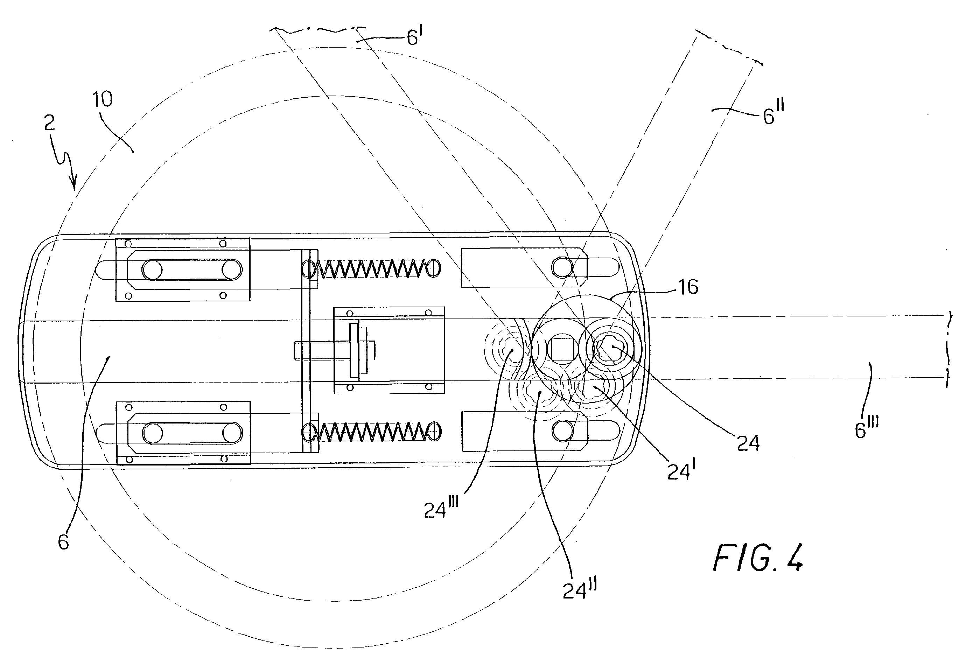

- figure 4 is a top internal view of the anti-theft device of figure 1, in different intermediate positions;
- figures 5 and 6 show in particular a section of the lock, with its relative key, of an anti-theft device realised in accordance with the present invention;

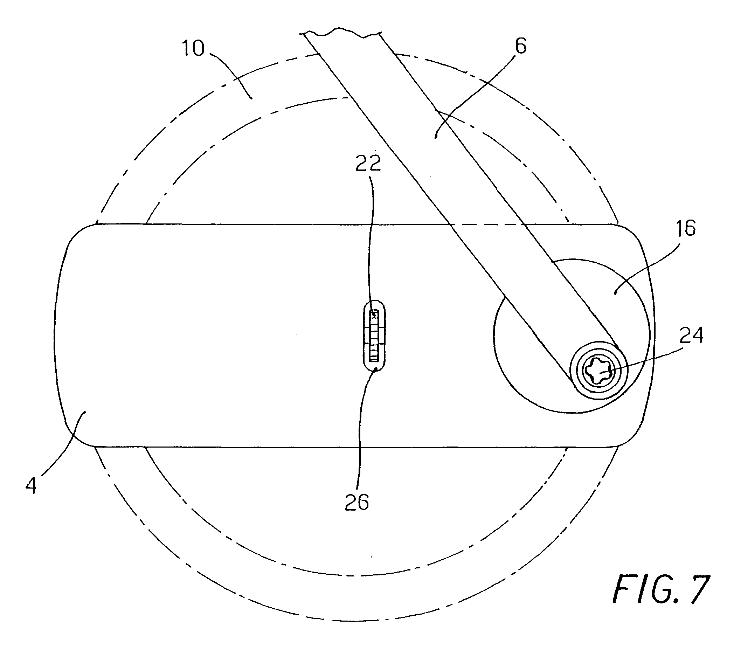

- figure 7 is a top view of the anti-theft device of figure 1, in an intermediate position;

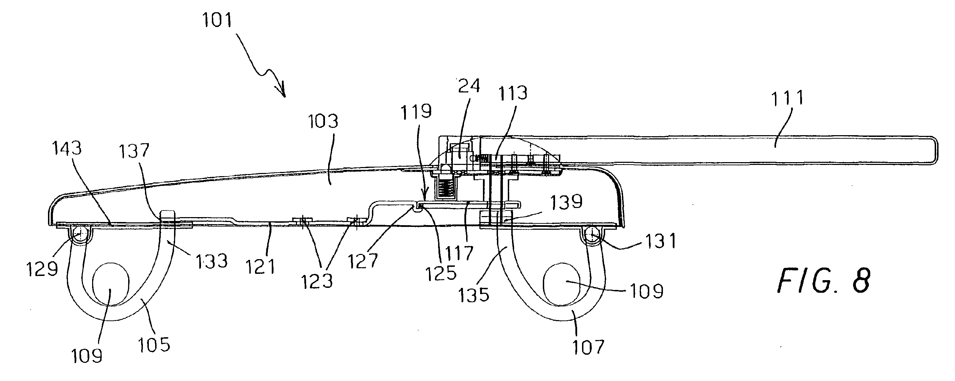

- figure 8 is an elevational side view of a second embodiment of a device realised according to the present invention, in extended position;

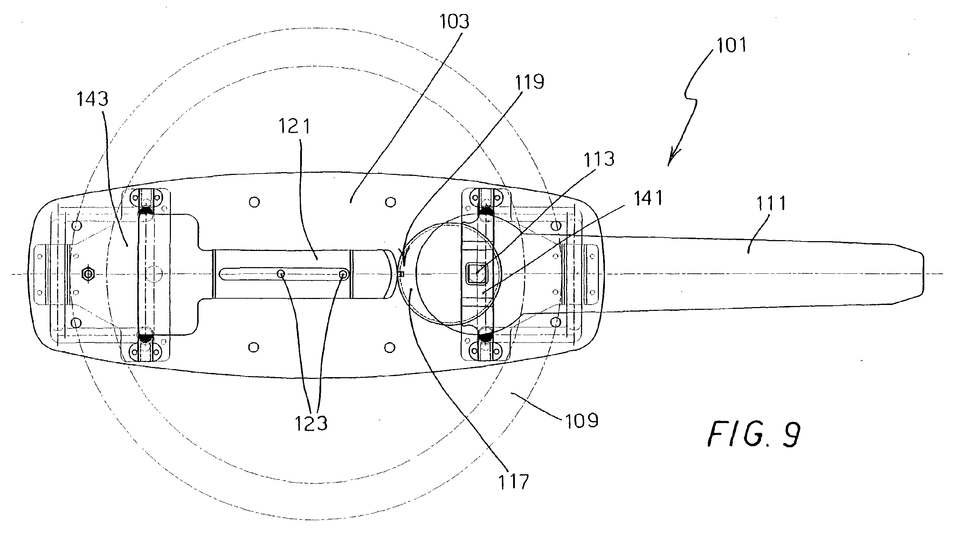

- figure 9 is top plan view of the device of figure 8;

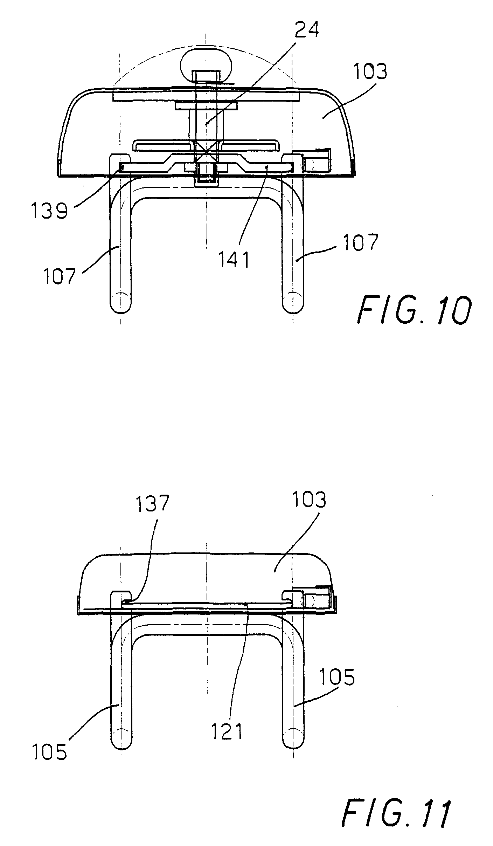

- figure 10 is a right front view of the device of figure 8; and
- figure 11 is a left front view of the device of figure 8.

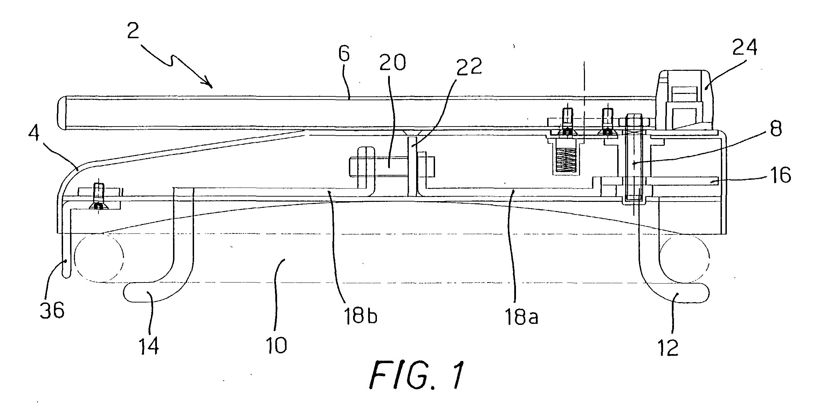

With reference to figure 1, an anti-theft device 2, realised according to a first embodiment of the present invention and able to be coupled with a steering wheel of a vehicle, is constituted by an elongated body provided with means for securing said steering wheel to the rim 10, said elongated body comprising a primary part 4 provided with first 12 and second 14 means able to engage with respective diametrically opposite parts of the rim 10 of said steering wheel, and a secondary part 6 able to make said primary part 4 longer in order to prevent the rotation of said steering wheel.

Said primary part 4 and said secondary part 6 are hinged between them by means of a hinge pin 8, so that said secondary part 6 can rotate with respect to said primary part 4 on a plane substantially parallel to the plane of the rim 10 of the steering wheel, for assuming a working position in which the two parts 4, 6 are substantially aligned.

A cylindrical key lock 24 is provided in correspondence with the hinge zone of said two parts 4, 6 in order to block the rotation of said secondary part 6 with respect to said primary part 4.

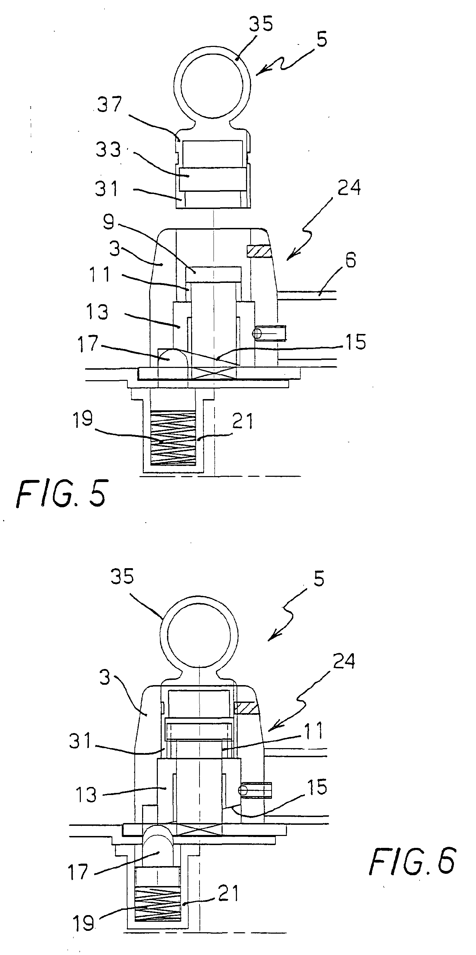

Said lock 24, shown in detail in the figures 5 and 6, is substantially constituted by: an Internally hollow body 3 which houses as internal components a fixed part 9 having a same external profile as the internal profile 9 of the key 5; a rotating part 11, arranged under said fixed part 9, having the same profile as said fixed part and integral with a lower cylindrical element 13 having the base surface 15 inclined; and a pawl 17, axially pushed against the inclined lower surface 15 of the lower element 13 by a spring 19 housed in a suitable seat 21.

In turn, the key 5 for said lock is constituted by: a first lower part 31 having the same profile 9 as the fixed part 9 of the hollow body 3 of the lock; a second cylindrical part 33 with a diameter greater than the circumference circumscribed to the fixed part 9 and able to rotate, once the key has been put, around said shaped fixed part 9, internal to the hollow body 3; and a third upper part 37, analogous to the part 31, to which an external ring 35, or handle, is applied and by means of which it is possible to operate the key 5.

Said first means 12, able to engage with the rim 10 of said steering wheel, are fixed with respect to said primary part 4 and comprise at least an L-bent element, while said second means 14 are longitudinally movable with respect to the body of the device and comprise at least an L-bent element.

Said second means 14 are connected by means of a kinematic mechanism 16, 18, 20, with the rotation of said secondary part 6 so that, when said secondary part 6 is rotated from a rest position in which it overlaps the primary part 4, to the working position, said second means 14 engage with the rim 10 of the steering wheel, securing said primary part 4 to said steering wheel.

Said second means 14 comprise two L-bent elements arranged at such a distance that they can comprise on the inside a spoke of said steering wheel.

It is further provided a plate 36, able to externally cover a portion of said rim in correspondence with said second means 14, in order to prevent the cutting of the rim near said spoke.

Said kinematic mechanism 16, 18, 20 comprises means 20, 22 for adjusting the distance between said first 12 and said second 14 means able to engage with the rim 10 of said steering wheel, for adapting to steering wheels of different diameters.

When said secondary part 6 is in a position different from the working position, said adjustment is accessible from the outside of the device by means of a slit 26.

Said kinematic mechanism comprises an eccentric wheel 16 connected with the rotation axis of said secondary part 6, which pushes a series of rods 18a, 18b connected with said second means 14 and able to engage with the rim 10 of said steering wheel.

When the secondary part 6 is brought back into the rest position for removing the anti-theft device from the steering wheel, a pair of springs 32, 34 recalls the rods 18b and thus the second means 14.

A second embodiment of an anti-theft device realised according to the present invention is shown in the figures from 8 to 11.

The device shown in the figures from 8 to 11 is substantially constituted by an elongated body 101 which comprises a primary part 103 provided with first 107 and second 105 means able to engage with respective diametrically opposite portions of the rim 109 of a steering wheel, and a secondary part 111 able to make the primary part 103 longer, in order to prevent the rotation of the steering wheel 109 of a vehicle.

The primary part 103 and the secondary part 111 are hinged between them by means of a hinge pin 113 so that said secondary part 111 can rotate with respect to said primary part 103 on a plane substantially parallel to the plane of the rim 109 of the steering wheel, for assuming a working position in which the two parts 103 and 111 are substantially aligned on two parallel planes.

A cylindrical key lock 24 is provided in correspondence with the hinge zone of said two parts 103 and 111 in order to block the rotation of said secondary part 11 with respect to said primary part 3.

The lock 24 is of the type previously described with reference to the figures 5 and 6.

Integral with the hinge pin 113 and with the secondary part 111 is arranged a disc element 117, eccentric with respect to said pin 113, which engages in 119 with another substantially linear element 121, slidingly secured in 123 to the lower part of the primary part 103.

Said engagement is constituted by an edge 125 of the disc element 117, normal to the plane of said disc 117, which engages into a groove 127 provided in the near end of the element 121, said end being provided as an arc of a circle and arranged convex with respect to said disc element 117.

Said first 107 and second 105 means, able to engage with the rim 109 of the steering wheel are U-arranged and are hinged, in the points 129 and 131, to the two ends of the primary part 103 having the greatest reciprocal distance.

The other ends 135 and 133 of the U of said first 107 and second 105 means, are each equipped with a notch 139 and 137, able to couple with respective side walls of a plate 141, which are provided integral with and arranged under the secondary part 111 of the device, and with the side walls of the elongated body 121.

It is to be noted that said U-elements 107 and 105 are provided in a number of four, two on each side, so that the rim 109 of the steering wheel remains blocked from said elements in four points.

It is to be observed that the U-elements 105 are secured to a plate 143 slidingly arranged in the longitudinal sense of the primary part 103, in order to adapt the device to the width of the steering wheel.

The sliding of the plate 143 is obtained through appropriate slits which allow the sliding along said slits of the securing means of the plate to the primary part 103.

## Claims

1. Anti-theft device (2; 101) for vehicles, able to be coupled with a steering wheel for preventing the rotation of said steering wheel, comprising an elongated body, provided with means for securing the rim (10; 119) of said steering wheel, **characterised in that** said elongated body comprises a primary part (4; 103) provided with first (12; 107) and second (14; 105) means able to engage with respective diametrically opposite portions of the rim (10; 119) of said steering wheel, and a secondary part (6; 111) able to make said primary part (4; 103) longer for preventing the rotation of said steering wheel, and in that said primary part (4; 103) and said secondary part (6; 111) are hinged between them by means of a hinge pin (8; 113) so that said secondary part (6; 111) can rotate with respect to said primary part (4; 103), on a plane substantially parallel to the plane of the rim (10; 119) of the steering wheel, in order to assume a working position wherein the two parts (4; 103 and 6; 111) are substantially aligned.

2. Device according to claim 1, further comprising a lock (24) able to block the rotation of said secondary part (6; 111) with respect to said primary part (4; 103).

3. Device according to claim 2, wherein said lock (24) is a cylindrical key lock (5), wherein said key (5) is shaped and acts on a mobile element (11), arranged under a fixed part (9) having the same profile, integral with a cylindrical lower element (13), having an inclined_base surface (15); said inclined surface (15) acting in turn on a pawl (17), axially pushed against said lower inclined surface (15) by a spring (19).

4. Device according to claim 1, wherein said first means (12) able to engage with the rim (10) of said steering wheel are fixed with respect to said primary part (4) and comprise at least an L-bent element, while said second means (14) are longitudinally movable with respect to the body of the device and comprise at least an L-bent element, said second means (14) being connected, by means of a kinematic mechanism (16, 18, 20), with the rotation of said secondary part (6), so that, when said secondary part (6) is rotated from a rest position, in which it overlaps the primary part (4), to the working position, said second means (14) engage with the rim (10) of the steering wheel, securing said primary part (4) to said steering wheel.

5. Device according to claim 4, wherein said second means (14) comprise two L-bent elements, arranged at such a distance that they can comprise on the inside a spoke of said steering wheel.

6. Device according to claim 5, further comprising a plate (36) able to externally cover a portion of said rim in correspondence with said second means (14), in order to prevent the cutting of the rim near said spoke.

7. Device according to claim 4, wherein said kinematic mechanism comprises means (20, 22) for adjusting the distance between said first (12) and said second (14) means able to engage with the rim (10) of said steering wheel, for adapting to steering wheels of different diameters, said adjustment being accessible from the outside of the device, by means of a slit (26), when said secondary part (6) is in a position different from the working position.

8. Device according to claim 4, wherein said kinematic mechanism comprises an eccentric wheel (16), connected with the rotation axis (8) of said secondary part (6), which pushes a series of rods (18a, 18b) connected with said second means (14) and able to engage with the rim (10) of said steering wheel.

9. , Device according to claim 1, **characterised by** the fact that integral with the hinge pin (113) and with the secondary part (111) is arranged a disc element (117), eccentric with respect to said pin (113), which engages (119) with another substantially linear element (121), slidingly secured (123) to the lower part of the primary part (103); said engagement being constituted by an edge (125) of the disc element (117), normal to the plane of said disc (117), which engages into a groove (127) provided in the near end of said element (121), said end being provided as an arc of a circle and arranged convex with respect to said disc element (117); said first (107) and second (105) means, able to engage with the rim (109) of the steering wheel, being U-provided and hinged (131, 129) to the two opposite ends of the primary part (103) having the greatest reciprocal distance; the other ends (135; 133) of said first (107) and second (105) means, opposite to the hinged ends (131, 129), being each equipped with a notch (139; 137), able to couple with the respective side walls of a plate 141, provided integral with the secondary part (111) of the device, and with the side walls of said substantially linear element (121).

10. Device according to claim 9, wherein said first (107) and second (105) U-elements for gripping the rim (109) of the steering wheel are provided in a number of four, two on each side, so that said rim (109) remains blocked from said elements (107; 105) in four points.

11. Device according to claim 9, wherein said second U-means (105) are hinged to a plate (143) slidingly arranged in the longitudinal direction of said primary part (103) for adapting the device to the width of the steering wheel, thanks to appropriate slits, provided in the plate (143), which allow the sliding along said slits of the securing means of the plate to the primary part (103).
